(19) Europäisches Patentamt / European Patent Office / Office européen des brevets

(11) **EP 3 839 843 A1**

(12) **EUROPÄISCHE PATENTANMELDUNG**

(43) Veröffentlichungstag:
   **23.06.2021   Patentblatt 2021/25**

(51) Int Cl.:
   **G06Q 10/04** (2012.01)       **G06N 20/20** (2019.01)
   **G06Q 50/04** (2012.01)

(21) Anmeldenummer: **19218452.1**

(22) Anmeldetag: **20.12.2019**

(84) Benannte Vertragsstaaten:
   **AL AT BE BG CH CY CZ DE DK EE ES FI FR GB
   GR HR HU IE IS IT LI LT LU LV MC MK MT NL NO
   PL PT RO RS SE SI SK SM TR**
   Benannte Erstreckungsstaaten:
   **BA ME**
   **KH MA MD TN**

(71) Anmelder: **Siemens Aktiengesellschaft**
   **80333 München (DE)**

(72) Erfinder:
   • **Dowie, Ulrike**
   **85579 Neubiberg (DE)**

   • **Grothmann, Ralph**
   **27356 Rotenburg (DE)**
   • **Kroiß, Christian Marcel**
   **80993 München (DE)**
   • **Kühn-Simon, Simone**
   **91056 Erlangen (DE)**
   • **Schwulera, Erik**
   **91058 Erlangen (DE)**
   • **Seeger, Matthias**
   **96132 Aschbach (DE)**
   • **Yee, Dianna**
   **81825 München (DE)**

(54) **VERFAHREN ZUM OPTIMIEREN EINER FERTIGUNG EINER INDUSTRIEANLAGE**

(57) Computerimplementiertes Verfahren zum Optimieren einer Fertigung einer Industrieanlage, wobei die Industrieanlage dazu eingerichtet ist, eine vorgebbare Stückzahl ($N_{P1}$, $N_{P2}$, ... $N_{Pn}$) von mindestens einem Produkt (P1, ... Pn) herzustellen, wobei
- zu einem ersten Zeitpunkt (t1) ein mittels maschinellen Lernens trainiertes Modell ($M_{t1}$) bereitgestellt wird;
- zu einem zweiten, nach dem ersten Zeitpunkt (t1) folgenden Zeitpunkt (t2), das trainierte Modell ($M_{t1}$) ausgeführt wird, um einen rollierenden Forecast ($F_T$) für ein vorgebbares Zeitintervall (T) zu erzeugen, wobei das vorgebbare Zeitintervall (T) nach dem zweiten Zeitpunkt (t2) beginnt und der rollierende Forecast ($F_T$) für jeden beliebigen Zeitpunkt (t') innerhalb des Zeitintervalls (T) eine zu diesem Zeitpunkt (t') herzustellende Stückzahl ($N_{P1,t'}$, $N_{P2,t'}$, ... $N_{Pn,t'}$) des mindestens einen Produkts (P1, ... Pn) prognostiziert;
- der rollierende Forecast ($F_T$) mittels eines weiteren Modells (M') weiterverarbeitet wird, um auf Basis des rollierenden Forecasts ($F_T$) einen Re-Forecast ($RF_T$) zu berechnen.

FIG 2

EP 3 839 843 A1

**Beschreibung**

Die Erfindung betrifft ein computerimplementiertes Verfahren zum Optimieren einer Fertigung einer Industrieanlage, wobei die Industrieanlage dazu eingerichtet ist, eine vorgebbare Stückzahl $N_{P1}$, $N_{P2}$, ... $N_{Pn}$ von mindestens einem Produkt P1, ... Pn herzustellen. Vorzugsweise kann die Industrieanlage eine Mehrheit von Produkten bzw. mehrere Produkttypen nach Stückzahl herstellen.

Außerdem betrifft die Erfindung ein System zur Datenverarbeitung, umfassend Mittel zur Ausführung eines solchen Verfahrens; ein Computerprogramm, umfassend Befehle, die bei der Ausführung des Programms durch einen Computer diesen veranlassen, ein solches Verfahren auszuführen und ein computerlesbares Medium, umfassend Befehle, die bei der Ausführung durch einen Computer diesen veranlassen, ein solches Verfahren auszuführen.

Darüber hinaus betrifft die Erfindung ein Medium, beispielsweise ein computerlesbares Speichermedium oder ein Datenträgersignal.

Für eine termingerechte Belieferung von Kundenaufträgen ist eine ausreichende Verfügbarkeit von Material und Produktionskapazität von großer Bedeutung. Durch die stark schwankenden Kundenbedarfe, sowohl zeit- als auch mengenabhängig, kann es bei Überplanung zu Überbeständen und bei Unterplanung zu Produktionsstillstanden kommen. Dies kann beispielsweise zu einem Verlust von Kundenaufträgen aufgrund fehlender Lieferfähigkeit führen. Daher wird in der Supply-Chain eine möglichst hohe Prognosegenauigkeit der zukünftigen Kundenaufträge angestrebt.

Für entsprechende Vorhersagen können beispielsweise experten-Systeme genutzt werden. Bei expertenbasierten Systemen wird i.d.R. der Kundenansprechpartner oder Marktexperte befragt und aufgrund ihrer Einschätzung eine Prognose abgegeben.

Im heutigen Industrie 4.0. Umfeld kommt es zu häufigen kurzfristigen Änderungen im Kundenverhalten. Die bekannten Systeme können diesem aber nicht schnell genug folgen.

Der vorliegenden Erfindung liegt die Aufgabe zugrunde die Prognosegenauigkeit unter den vorgenannten Bedingungen zu verbessern und dadurch die Fertigung einer Industrieanlage, beispielsweise einer Fertigungsanlage zu optimieren.

Die Aufgabe wird mit einem eingangs genannten Verfahren erfindungsgemäß dadurch gelöst, dass

- zu einem ersten Zeitpunkt ein mittels maschinellen Lernens trainiertes Modell bereitgestellt wird;
- zu einem zweiten, nach dem ersten Zeitpunkt t1 folgenden Zeitpunkt, das trainierte Modell ausgeführt wird, um einen rollierenden Forecast für ein vorgebbares Zeitintervall zu erzeugen, wobei das vorgebbare Zeitintervall nach dem zweiten Zeitpunkt beginnt und der rollierende Forecast für jeden beliebigen Zeitpunkt innerhalb des Zeitintervalls eine zu diesem Zeitpunkt herzustellende Stückzahl des mindestens einen Produkts prognostiziert;
- der rollierende Forecast mittels eines weiteren Modells weiterverarbeitet wird, um auf Basis des rollierenden Forecasts einen Re-Forecast zu berechnen.

In einer Ausführungsform kann in Abhängigkeit von dem berechneten Re-Forecast zumindest ein Fertigungsparameter, beispielsweise Materialmenge, Personaleinteilung usw. der Industrieanlage angepasst werden.

Die Weiterverarbeitung des rollierenden Forecasts mittels des weiteren Modells hat zum Vorteil, dass das trainierte Modell seltener trainiert werden muss. Es wurde festgestellt, dass die trainierten Modelle zu träge sind, um für sich sehr dynamisch verhaltende Kundenbedarfe gute Prognosen zu liefern. Das Neutrainieren des Modells ist zeitaufwändig und findet in dem meisten Fällen nicht öfter als einmal pro Quartal statt. Prognosen, die mit einem trainierten Modell erzielt werden, das mit der oben beschriebenen niedrigen Frequenz trainiert wird, sind verbesserungsfähig.

Das weitere Modell, vorzugsweise ein mathematisches exaktes und somit schnell ausführbares Modell - wird hier auch als "Post-Processor" genannt - trägt den Abweichungen der mit dem trainierten Modell errechneten rollierenden Vorhersage von der beobachteten Realität die Rechnung und korrigiert den zukünftigen Forecast dementsprechend.

Durch Einsatz des Post-Processors kann die Prognosegenauigkeit verbessert werden. Der Post-Processor kann die Abweichungen aus der Vergangenheit und gleichzeitig die bereits bestehenden Kundenbedarfe für die Zukunft nutzen, um die zukünftigen Abweichungen zu minimieren.

In einer Ausführungsform umfasst der Post-Processor (das weitere Modell) mehrere Parameter, über welche ein bewusstes Über- oder Unterschätzen der zukünftigen, insbesondere der kurzfristig zu erwartenden Aufträge eingestellt werden kann.

Bei einer Ausführungsform kann mit Vorteil vorgesehen sein, dass das erste trainierte Modell auf mindestens einem neuronalen Netz und/oder auf mindestens einem Entscheidungsbaum und/oder auf mindestens einem linearen Modell basiert.

Darüber hinaus kann es zweckdienlich sein, wenn das weitere Modell ein vorzugsweise heuristisches mathematisches Modell ist und wobei zur Berechnung des Re-Forecasts tatsächliche Werte der herzustellenden Stückzahl und/oder der tatsächlichen Anzahl der Aufträge und/oder des tatsächlichen Auftragsbestands und/oder mindestens eine unter Verwendung von mindestens einem der vorgenannten Werten errechnete statistische Größe beziehungsweise mindestens ein unter Verwendung von mindestens einem der vorgenannten Werten errechneter statistischer Parameter verwendet wird/werden.

Somit können sowohl Vergangenheitswerte als auch zukünftige (prognostizierte) Werte für den Re-Forecast genutzt. Auf kurzfristige Änderungen kann schneller reagiert werden und dadurch eine höhere Prognosegenauigkeit erreicht werden. Dadurch können sowohl kurzfristige Effekte als auch mittelfristige Trends erkannt werden.

Des Weiteren wird die Aufgabe durch ein vorgenanntes Medium, beispielsweise ein computerlesbares Speichermedium oder ein Datenträgersignal, erfindungsgemäß dadurch gelöst, dass das Medium zumindest einen wie oben beschrieben berechneten Re-Forecast umfasst.

Die Erfindung samt weiteren Vorteilen ist im Folgenden an Hand beispielhafter Ausführungsformen näher erläutert, die in der Zeichnung veranschaulicht sind. In dieser zeigt

FIG 1    eine Industrieanlage, die zur Herstellung mehrerer Produkte ausgelegt ist;
FIG 2    ein Ablaufdiagramm eines Verfahrens, und
FIG 3    einen Zeitstrahl zur Berechnung eines Re-Forecasts.

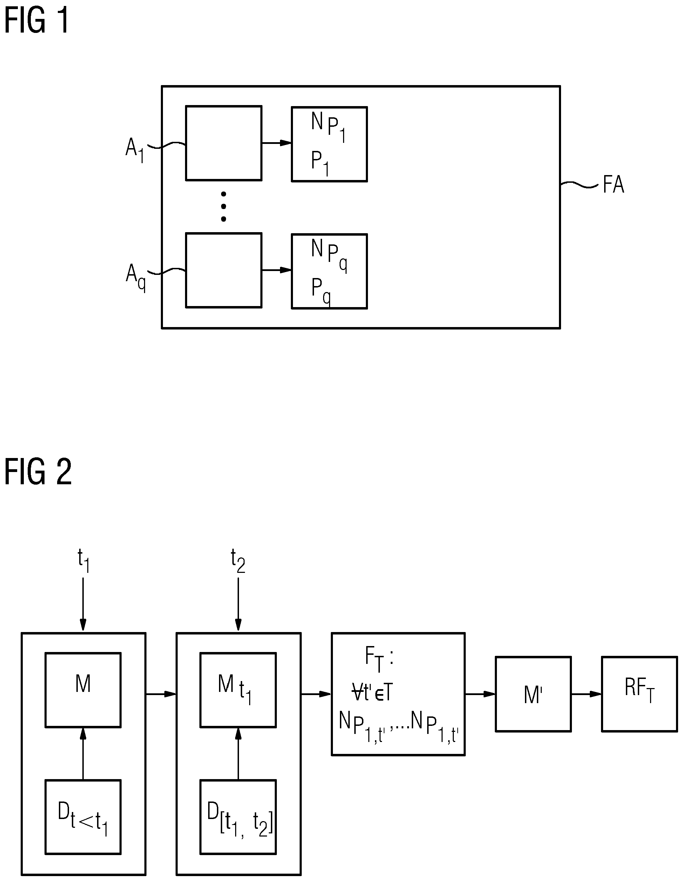

FIG 1 stellt schematisch eine industrielle Fertigungsanlage FA, beispielsweise eine automatisierte oder autonome Fertigungsanlage dar. Die Anlage ist im Stande eine bestimmte Anzahl von Produkten P1, ... Pq herstellen, die beispielsweise per einen Auftrag bestellt werden können. Dabei werden unter Produkten vor allem materielle Produkte - im Gegensatz zu Dienstleistungen - verstanden. Dafür kann die Fertigungsanlage FA Fertigungsmaschinen A1, ... Aq umfassen, die jeweils ein bestimmtes Produkt herstellen. Es ist durchaus möglich, dass eine Fertigungsmaschine mehrere verschiedene Produkte herstellt. Beispielsweise kann vorgesehen sein, dass eine einzige Fertigungsmaschine alle Produkte herstellt.

Jede Fertigungsmaschine, z.B. Ai, kann so ausgelegt sein, dass sie $N_{Pi}$ Stück von dem Produkt Pi innerhalb einer bestimmten Zeit herstellen kann.

FIG 2 zeigt ein Beispiel eines Verfahrens zur Optimierung einer Fertigung einer Fertigungsanlage FA. Die Optimierung kann basierend auf historischen Daten betreffend die herzustellende Stückzahl $N_{P1}$, $N_{P2}$, ... $N_{Pn}$ von bestimmten Produkten P1, ... Pn, wobei n kleiner oder gleich q ist, die die Fertigungsanlage herstellen kann, durchgeführt werden. Solche historische Daten können beispielsweise das Kundenverhalten retrospektiv beschreiben.

Bei der Fertigungsanlage FA können Aufträge aufgegeben werden, bei denen Kunden beispielsweise nach $N_{Pk}$ Stück vom Produkt Pk zum Zeitpunkt tk usw. fragen können. Die Kundenaufträge können aber zurückgezogen oder die herzustellende Stückzahl, z.B. $N_{Pk}$, kann reduziert oder erhöht werden. Um das zukünftige Kundenverhalten vorherzusagen, kann maschinelles Lernen verwendet werden.

Zu einem ersten Zeitpunkt t1 wird dabei ein mittels maschinellen Lernens trainiertes Modell $M_{t1}$ bereitgestellt. Das trainierte Modell kann beispielsweise auf neuronalen Netzen, Entscheidungsbäumen, linearen Modellen o.Ä. basieren. Dabei kann das Modell M auf Trainingsdaten $D_{t<t1}$ trainiert worden sein, die vor dem ersten Zeitpunkt t1 gesammelt wurden - also die das historische Kundenverhalten vor dem ersten Zeitpunkt t1 repräsentieren.

Zu einem zweiten Zeitpunkt t2, der vorzugsweise nach dem ersten Zeitpunkt t1 liegt (t2 ≥ t1), wird das trainierte Modell $M_{t1}$ ausgeführt, um einen rollierenden Forecast $F_T$ für ein vorgebbares Zeitintervall T zu erzeugen. Dabei können als Input-Daten für das trainierte Modell $M_{t1}$ Daten verwendet werden, die das Kundenverhalten zwischen t2 und t1 repräsentieren. Es ist durchaus denkbar, dass t1 = t2 ist.

Dabei beginnt das vorgebbare Zeitintervall T nach, vorzugsweise mit dem zweiten Zeitpunkt t2.

Um dem sich mit der Zeit ändernden Kundenverhalten gerecht zu werden, prognostiziert der rollierende Forecast $F_T$ für jeden beliebigen Zeitpunkt t' innerhalb des Zeitintervalls T zu diesem Zeitpunkt t' herzustellende Stückzahlen $N_{P1,t'}$, $N_{P2,t'}$, ... $N_{Pn,t'}$ von entsprechenden Produkten P1, ... Pn und/oder Anzahl der Aufträge für Produkte P1, ... Pn. Entsprechend dieser Prognose werden Parameter der Fertigungsanlage FA eingestellt. Diese Parameter können beispielsweise zu einem bestimmten Zeitpunkt zur Verfügung stehende Material- und/oder Personalmenge sein.

Es versteht sich, dass die Aufträge fertigungsrelevante Angaben, z.B. zu der Stückzahl, in der das jeweilige Produkt hergestellt werden soll, und zu der Zeit, in der das jeweilige Produkt hergestellt werden soll, insbesondere zu dem Zeitpunkt, zu dem das jeweilige Produkt geliefert werden soll, enthalten.

Um die Prognosegenauigkeit bei stark und innerhalb kurzer Zeit (es können beispielsweise ein Drittel der Aufträge innerhalb einer Woche storniert werden) schwankenden Kundenbedarfen zu verbessern, wird der rollierende Forecast $F_T$ mittels eines weiteren Modells M' weiterverarbeitet. Dabei wird auf Basis des rollierenden Forecasts $F_T$ ein Re-Forecast $RF_T$ berechnet.

Bei der Weiterverarbeitung des rollierenden Forecasts $F_T$ können weitere Größen, die bereits bekannt sind, berücksichtigt werden. Beispielsweise können zum Berechnen des Re-Forecasts $RF_T$ Auftragsbestände und/oder Auftragseingänge usw. verwendet werden.

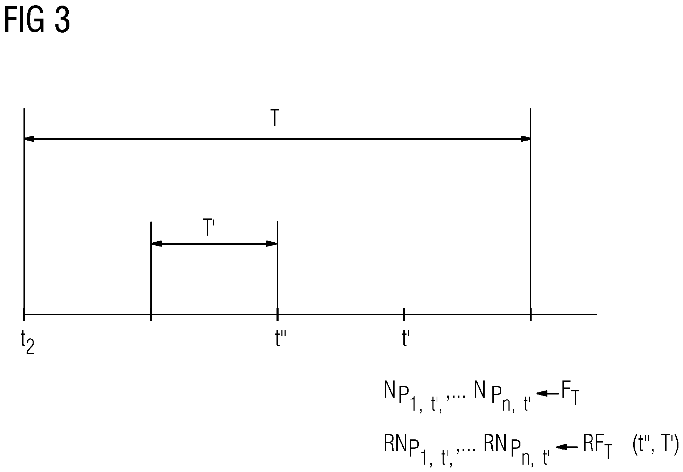

Möchte man den Re-Forecast $RF_T$ zu einem Zeitpunkt t' innerhalb des Zeitintervalls T berechnen, zu dem gemäß dem rollierenden Forecast $F_T$ $N_{P1,t'}$, $N_{P2,t'}$, ... $N_{Pn,t'}$ Stück von Produkten P1, ... Pn hergestellt werden sollte, kann wie folgt vorgegangen werden. Ein Beispiel eines entsprechenden Zeitstrahls ist FIG 3 zu entnehmen.

Beispielsweise kann ein weiterer Zeitpunkt t" zwischen dem Beginn des Intervalls T und dem Zeitpunkt t' gewählt werden. Der Unterschied zwischen t" und t' kann beispielsweise eine halbe bis zwei Wochen, vorzugsweise eine Woche sein. Der Unterschied zwischen t" und dem Beginn des Intervalls T, z.B. dem zweiten Zeitpunkt t2 kann beispielsweise zwei bis fünf, insbesondere vier Wochen betragen.

Das weitere Modell M', beispielsweise als ein (heuristisches) mathematisches Modell ausgebildet sein kann, kann dabei auf vorliegenden vor dem weiteren Zeitpunkt t" gesammelten Daten basieren, wobei die Daten den Verlauf der Auftragseingänge und/oder der Auftragsbestände repräsentieren können.

Das mathematische Modell M' kann Abweichungen einer Prognose gemäß dem rollierenden Forecast $F_T$ von der tatsächlich beobachteten Auftragsentwicklung nutzen und in Reaktion auf diese Abweichungen den Re-Forecast $RF_T$ erstellen. Dabei können Abweichungen mittels verschiedener statistischer Funktionen verarbeitet werden. Dies vereinfacht die Berechnung des weiteren Modells'.

Insbesondere kann die zu dem Zeitpunkt t' herzustellende Stückzahl $RN_{Pi,t'}$ von einem der Produkte, z.B. von dem Produkt Pi, an dem Zeitpunkt t" gemäß dem folgenden mathematischen Modell M' berechnet werden:

$$RN_{Pi,t'} = \max\left\{ N_{Pi,t'} - \underset{t''-T'\leq t\leq t''}{\text{mean}}\left(N_{PO_{Pi,t}} - N_{AO_{Pi,t}}\right) * \underset{t''-T'\leq t\leq t''}{\text{median}}\left(\frac{AN_{Pi,t}}{N_{AO_{Pi,t}}}\right), ON_{Pi,t'}\right\} \quad (1)$$

Dabei sind:

$N_{Pi,t'}$ - gemäß dem rollierenden Forecast $F_T$ vorhergesagte, zu dem Zeitpunkt t' herzustellende Stückzahl von dem Produkt Pi; $\underset{t''-T'\leq t\leq t''}{\text{mean}}$ - ein Mittelwert über ein vor dem weiteren Zeitpunkt t" liegendes Zeitintervall T'. Historische Daten aus dem Zeitintervall T' werden zur Berechnung des Re-Forecasts $RF_T$ verwendet;

$N_{PO_{Pi,t}}$ - gemäß dem rollierenden Forecast $F_T$ vorhergesagte Anzahl der Aufträge für Produkt Pi ("predicted number of orders");

$N_{AO_{Pi,t}}$ - tatsächliche (tatsächlich beobachtete) Anzahl der Aufträge für Produkt Pi ("actual number of orders");

$AN_{Pi,t}$ - tatsächlich bestellte Stückzahl des Produkts Pi;

$ON_{Pi,t'}$ - tatsächlicher Auftragsbestand (zum Zeitpunkt t") zur Herstellung des Produkts Pi zu dem Zeitpunkt t'.

Das Zeitintervall T' kann beispielsweise zwei bis fünf Wochen betragen. Insbesondere beträgt das Zeitintervall T' vier Wochen. Zwischen t" und t' kann beispielsweise eine halbe Wochen bis zwei Wochen liegen. Insbesondere liegt zwischen t" und t' eine Woche.

Somit können in dem Modell M' solche statistischen Funktionen wie Mittelwert und/oder Median verwendet werden, um Abweichungen des rollierenden Forecasts $F_T$ von den tatsächlich beobachteten Werten zu glätten.

Das mathematische Modell M' gemäß Formel (1) ergibt den größeren aus zwei Werten. Einer dieser Werte ist der zum Zeitpunkt t" vorliegende Auftragsbestand $ON_{Pi,t'}$ für das Produkt Pi und den Zeitpunkt t', der nach dem Zeitpunkt t" liegt (FIG 3). Der zweite Wert repräsentiert eine aufgrund von Abweichungen der Prognose gemäß dem rollierenden Forecast $F_T$ von der tatsächlich beobachteten Auftragsentwicklung korrigierte Vorhersage

In Abhängigkeit von den berechneten Stückzahlen $RN_{Pi,t'}$ kann nun Fertigung der Industrieanlage angepasst werden. Beispielsweise kann noch rechtzeitig benötigte Materialmenge kontrolliert und/oder Einteilung des entsprechenden Personals angepasst werden.

Das weitere Modell M' kann weitere Größen, beispielsweise gemäß dem rollierenden Forecast $F_T$ prognostizierte Nachfrage-Rate $\dfrac{N_{Pi,t}}{N_{PO_{Pi,t}}}$ für alle Pi.

Zusammenfassend betrifft die Erfindung ein Verfahren, bei dem Fertigung einer Anlage durch Erhöhen der Prognosegenauigkeit für die zukünftig herzustellende Stückzahl der jeweiligen Produkte optimiert wird, wobei das Erhöhen der Prognose durch Verwenden eines mittels maschinellen Lernens trainierten Modells und eines weiteren, vorzugsweise heuristischen, einfachen mathematischen Modells, das die Vorhersagen des trainierten Modells korrigiert, erreicht wird.

Es ist ersichtlich, dass Abänderungen und/oder Hinzufügungen von Teilen an dem zuvor beschriebenen Optimierungsverfahren erfolgen können, ohne dass vom Gebiet und Umfang der vorliegenden Erfindung abgewichen wird. Ebenfalls ersichtlich ist, dass die Erfindung zwar in Bezug auf einige konkrete Beispiele beschrieben worden ist, ein Fachmann jedoch sicher in der Lage sein sollte, viele andere entsprechende Formen eines Optimierungsverfahrens zu erhalten, die die in den Ansprüchen dargelegten Eigenschaften aufweisen und damit alle in den dadurch festgelegten Schutzumfang fallen.

Die Bezugszeichen in den Ansprüchen dienen lediglich zum besseren Verständnis der vorliegenden Erfindung und bedeuten auf keinen Fall eine Beschränkung der vorliegenden Erfindung.

## Patentansprüche

1. Computerimplementiertes Verfahren zum Optimieren einer Fertigung einer Industrieanlage, wobei die Industrieanlage dazu eingerichtet ist, eine vorgebbare Stückzahl ($N_{P1}$, $N_{P2}$, ... $N_{Pn}$) von mindestens einem Produkt (P1, ... Pn) herzustellen, wobei

   - zu einem ersten Zeitpunkt (t1) ein mittels maschinellen Lernens trainiertes Modell ($M_{t1}$) bereitgestellt wird;
   - zu einem zweiten, nach dem ersten Zeitpunkt (t1) folgenden Zeitpunkt (t2), das trainierte Modell ($M_{t1}$) ausgeführt wird, um einen rollierenden Forecast ($F_T$) für ein vorgebbares Zeitintervall (T) zu erzeugen, wobei das vorgebbare Zeitintervall (T) nach dem zweiten Zeitpunkt (t2) beginnt und der rollierende Forecast ($F_T$) für jeden beliebigen Zeitpunkt (t') innerhalb des Zeitintervalls (T) eine zu diesem Zeitpunkt (t') herzustellende Stückzahl ($N_{P1,t'}$, $N_{P2,t'}$, ... $N_{Pn,t'}$) des mindestens einen Produkts (P1, ... Pn) prognostiziert;
   - der rollierende Forecast ($F_T$) mittels eines weiteren Modells (M') weiterverarbeitet wird, um auf Basis des rollierenden Forecasts ($F_T$) einen Re-Forecast ($RF_T$) zu berechnen.

2. Verfahren nach Anspruch 1, wobei ferner in Abhängigkeit von dem berechneten Re-Forecast ($RF_T$) zumindest ein Fertigungsparameter der Industrieanlage angepasst wird.

3. Verfahren nach Anspruch 1 oder 2, wobei das erste trainierte Modell ($M_{t1}$) auf mindestens einem neuronalen Netz und/oder auf mindestens einem Entscheidungsbaum und/oder auf mindestens einem linearen Modell basiert.

4. Verfahren nach einem der Ansprüche 1 bis 3, wobei das weitere Modell ein vorzugsweise heuristisches mathematisches Modell (M') ist und wobei zur Berechnung des Re-Forecasts ($RF_T$) tatsächliche Werte der herzustellenden Stückzahl und/oder der tatsächlichen Anzahl der Aufträge und/oder des tatsächlichen Auftragsbestands und/oder mindestens eine unter Verwendung von mindestens einem der vorgenannten Werten errechnete statistische Größe beziehungsweise mindestens ein unter Verwendung von mindestens einem der vorgenannten Werten errechneter statistischer Parameter verwendet wird/werden.

5. Verfahren nach einem der Ansprüche 1 bis 4, wobei das weitere Modell (M') ein parametrisiertes Modell ist, und, insbesondere einen oder mehrere Parameter umfasst, über welche ein bewusstes Über- oder Unterschätzen der zukünftigen Aufträge eingestellt werden kann

6. System zur Datenverarbeitung, umfassend Mittel zur Ausführung des Verfahrens nach einem der Ansprüche 1 bis 5.

7. Computerprogramm, umfassend Befehle, die bei der Ausführung des Programms durch einen Computer diesen veranlassen, das Verfahren nach einem der Ansprüche 1 bis 5 auszuführen.

8. Computerlesbares Medium, umfassend Befehle, die bei der Ausführung durch einen Computer diesen veranlassen, das Verfahren nach einem der Ansprüche 1 bis 5 auszuführen.

9. Medium, beispielsweise ein computerlesbares Speichermedium oder ein Datenträgersignal, umfassend zumindest einen nach dem Verfahren nach einem der Ansprüche 1 bis 5 berechneten Re-Forecast ($RF_T$).

## FIG 1

$A_1$ → [ ] → $\begin{array}{c} N P_1 \\ P_1 \end{array}$

⋮

$A_q$ → [ ] → $\begin{array}{c} N P_q \\ P_q \end{array}$

FA

## FIG 2

$t_1$ ↓    $t_2$ ↓

$\begin{array}{c} M \\ D_{t < t_1} \end{array}$ → $\begin{array}{c} M\,t_1 \\ D_{[t_1,\,t_2]} \end{array}$ → $\begin{array}{c} F_T : \\ \forall t' \in T \\ N P_{1,t'}, \ldots N P_{1,t'} \end{array}$ → $M'$ → $RF_T$

FIG 3

$$T$$

$$T'$$

$$t_2 \qquad t'' \qquad t'$$

$$NP_{1,\,t'},\dots NP_{n,\,t'} \leftarrow F_T$$

$$RNP_{1,\,t'},\dots RNP_{n,\,t'} \leftarrow RF_T \quad (t'',\,T')$$

Europäisches
Patentamt

European
Patent Office

Office européen
des brevets

## EUROPÄISCHER RECHERCHENBERICHT

**Nummer der Anmeldung**

EP 19 21 8452

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2019/087733 A1 (DOOLEY ROBERT [US] ET AL) 21. März 2019 (2019-03-21) * Zusammenfassung; Abbildungen 1,2 * ----- | 1-9 | INV. G06Q10/04 G06N20/20 G06Q50/04 |
| X | US 10 061 300 B1 (COFFMAN VALERIE R [US] ET AL) 28. August 2018 (2018-08-28) * Zusammenfassung; Abbildungen 2,5 * ----- | 1-9 | |
| X | US 2018/276695 A1 (DIONE DIEGANE [US]) 27. September 2018 (2018-09-27) * Zusammenfassung; Abbildung 2 * ----- | 1-9 | |

**RECHERCHIERTE SACHGEBIETE (IPC)**

G06Q
G06N

Der vorliegende Recherchenbericht wurde für alle Patentansprüche erstellt

| Recherchenort | Abschlußdatum der Recherche | Prüfer |
|---|---|---|
| München | 30. April 2020 | Weidmann, Matthias |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

....................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 19 21 8452

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

30-04-2020

| Im Recherchenbericht angeführtes Patentdokument | Datum der Veröffentlichung | Mitglied(er) der Patentfamilie | Datum der Veröffentlichung |
|---|---|---|---|
| US 2019087733 A1 | 21-03-2019 | KEINE | |
| US 10061300 B1 | 28-08-2018 | US 10061300 B1<br>US 10338565 B1<br>US 2019339669 A1 | 28-08-2018<br>02-07-2019<br>07-11-2019 |
| US 2018276695 A1 | 27-09-2018 | KEINE | |

EPO FORM P0461

Für nähere Einzelheiten zu diesem Anhang : siehe Amtsblatt des Europäischen Patentamts, Nr.12/82